# EUROPÄISCHE PATENTSCHRIFT

(11) **EP 0 916 531 B1**
(45) Veröffentlichungstag und Bekanntmachung des Hinweises auf die Patenterteilung: **21.12.2005**
(21) Anmeldenummer: 98120711.1
(22) Anmeldetag: 31.10.1998
(51) Int. Cl.: B60H 1/32

(54) **Verfahren und Vorrichtung zum Betreiben eines Kältemittelsystems**
Method and device for operating a refrigerant system
Procédé et dispositif pour le fonctionnement d'un système à réfrigérant

(30) Priorität: 11.11.1997 DE 19749635; 13.02.1998 DE 19805880
(43) Veröffentlichungstag der Anmeldung: 19.05.1999
(73) Patentinhaber: SIEMENS AKTIENGESELLSCHAFT, 80333 München (DE)
(72) Erfinder: Kettner, Detlef, 68782 Brühl (DE); Schiller, Werner, 64390 Erzhausen (DE)

(56) Entgegenhaltungen:
- EP-A- 0 612 960
- DE-A- 3 935 571
- US-A- 4 856 293

## Beschreibung

Die Erfindung betrifft ein Verfahren zur Einstellung des Saugdruckes in einem Kältemittelkreislauf eines Kraftfahrzeuges, bei welchem ein aktueller Saugdruck bestimmt und mit einem einzustellenden Saugdruck verglichen wird, wobei in Abhängigkeit des Vergleichs die Fördermenge eines Kältemittels im Kältemittelkreislauf eingestellt wird, sowie eine Vorrichtung zur Durchführung des Verfahrens.

Aus der DE 38 43 924 C2 ist eine gattungsgemäße Klimaanlage für ein Kraftfahrzeug bekannt. Diese Klimaanlage weist einen Fahrzeugmotor und einen Verdichter mit variabler Kapazität auf. Der Verdichter ist ein Taumelscheibenverdichter, bei dem der Neigungswinkel der Taumelscheibe verändert und somit der Hubraum des Kompressors variiert wird. Mit Hilfe einer Detektorvorrichtung wird die thermische Belastung des Systems erfaßt und der erforderliche Saugdruck des Verdichters als Funktion der erfaßten thermischen Belastung bestimmt. Durch eine Variation des Hubraumes des Verdichters wird der gewünschte Saugdruck korrigiert.

Befindet sich der Kraftfahrzeugmotor im Leerlaufzustand, wird die Leerlaufdrehzahl des Motors entsprechend der Fördermenge des Verdichters eingestellt, um ein Absterben des Fahrzeugmotors zu verhindern.

Die Verwendung von hubraumgeregelten Kompressoren hat aber den Nachteil, daß der Einfluß des Rückexpansionsvolumens auf den Regelkreis nicht berücksichtigt wird.

Bei allen geregelten Hubkolbenkompressionen ist das konstruktiv bedingte Rückexpansionsvolumen (Schaltraum, Totvolumen) von großer Bedeutung, weil mit steigender Abregelung (d. h. Totpunktverschiebung) das Verhältnis Rückexpansionsvolumen zu aktuellem Hubvolumen immer ungünstiger wird. Als Folge davon wird bei Abregelung der volumetrische Wirkungsgrad immer schlechter und somit auch das Verhältnis Kälteleistung / Kom-pressorantriebsleistung, was einen hohen Energieverbrauch zur Folge hat.

Aus der DE 39 35 571 A1 ist eine Klimaanlage mit einem elektrisch betriebenen Kompressor bekannt, dessen Drehzahl anhand einer Frequenzumwandlereinrichtung auf der Basis eines Ausgangssignals einer Lastdetektoreneinrichtung gesteuert wird.

Der Erfindung liegt die Aufgabe zugrunde, eine Klimaanlage für ein Kraftfahrzeug anzugeben, deren Energieverbrauch optimal einstellbar ist und die trotzdem mit konstruktiv einfachen Mitteln herstellbar ist.

Erfindungsgemäß wird die Aufgabe durch eine Vorrichtung bzw. ein Verfahren mit den Merkmalen der unabhängigen Ansprüche gelöst. Der einzustellende Saugdruck wird über eine Drehzahlregelung eines Antriebselements variiert.

Vorteilhafterweise ist der Saugdruck kontinuierlich zu verändern.

Der Vorteil der Erfindung besteht darin, dass aufgrund der variablen Änderung des Sollwertes des Saugdruckes unter Aufwendung von weniger Energie die gleiche Behaglichkeit erzielt wird.

In einer weiteren Ausgestaltung der Erfindung weist eine Vorrichtung zum Betreiben eines Kältemittelsystems in einem Klimagerät für ein Kraftfahrzeug einen Verdampfer auf, durch welchen die zu kühlende Luft strömt, wobei die Luft über ein Kältemittel gekühlt wird, dessen Fördermenge durch einen von einem Antrieb betriebenen Kompressor eingestellt wird. Erfindungsgemäß wird die Drehzahl des vom Kraftfahrzeugmotor unabhängig betriebenen Antriebes in Abhängigkeit von einem am Kompressor einzustellenden Saugdruck bestimmt.

Die Erfindung hat den Vorteil, dass der Verdichter im Teillastbereich bei energetisch günstigen Bedingungen betrieben wird, wodurch eine Energieeinsparung im Kraftfahrzeug erzielt wird. Ein Nachheizen der Lufttemperatur hinter dem Verdampfer, um eine komfortable Innenraumtemperatur zu erreichen, entfällt. Das Verhältnis von Kälteleistung zur Kompressorantriebsleistung wird dabei optimal eingestellt. Zusätzlich am Kompressor angeordnete Steuergeräte zur Saugdruckeinstellung sind nicht notwendig.

In einer besonderen Ausgestaltung variiert eine Regeleinrichtung, die den aktuellen Saugdruck mit einem einzustellenden Saugdruck vergleicht in Abhängigkeit des Vergleichs die Drehzahl des Antriebs während der gesamten Betriebsdauer des Kompressors.

Vorteilhafterweise bilden der Kompressor und der drehzahlgeregelte Antrieb, welcher beispielsweise ein Elektromotor ist, eine bauliche Einheit, die unabhängig vom Fahrzeugmotor im Fahrzeug untergebracht wird. Somit ist ein Nachrüsten einer Klimaanlage mit einem solchen drehzahlgeregelten Kompressor einfach möglich.

Solche Baueinheiten weisen ein geringes Gewicht und geringe geometrische Abmessungen auf. Mit dieser Baueinheit läßt sich ein hermetisch abgeschlossenes Kältemittelsystem herstellen, was insbesondere unter dem Gesichtspunkt des Umweltschutzes vorteilhaft ist.

In einer Ausgestaltung steuert die Regeleinrichtung den Elektromotor getaktet an. Eine einfach zu realisierende Ansteuerung läßt sich insbesondere dadurch erreichen, daß die getaktete Ansteuerung des Elektromotors über eine Variation der Pulsweite des von der Regeleinrichtung erzeugten Ansteuersignals erfolgt.

In einer Weiterbildung weist der drehzahlgeregelte Kompressor ein festes Hubvolumen auf. Somit kann auf konstruktiv komplizierte Kompressoren, z. B. mit einer Taumelscheibe, verzichtet werden. Der Saugdruck wird allein durch die Drehzahl bestimmt.

Die Erfindung läßt zahlreiche Ausführungsformen zu. Eine davon soll anhand der in der Zeichnung dargestellten Figuren näher erläutert werden.

Es zeigt:
- Figur 1: Klimagerät eines Kraftfahrzeuges.
- Figur 2: Erfindungsgemäßer Kältemittelkreislauf des Kraftfahrzeuges.

Gleiche Merkmale sind mit gleichen Bezugszeichen gekennzeichnet.

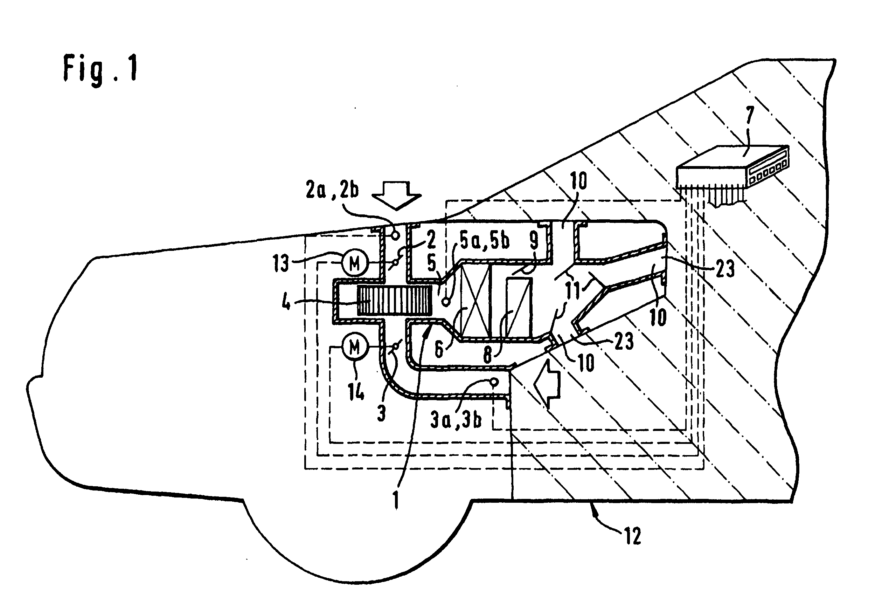

In Figur 1 ist das Klimagerät 1 in seiner konkreten Anordnung im Kraftfahrzeug 12 dargestellt. Über der Frischluftklappe 2 wird Frischluft aus der Umgebung des Fahrzeuges in das Kraftfahrzeug 12 angesaugt. Die Stellung der Frischluftklappe 2 wird von einem Stellmotor 13 in Abhängigkeit von elektrischen Signalen gesteuert, die vom Klimaregelgerät 7 erzeugt werden.

Die Umluft aus dem Fahrgastraum des Kraftfahrzeuges 12 wird über die Umluftklappe 3 vom Klimagerät 1 ebenfalls angesaugt. Auch die Stellung der Umluftklappe 3 wird in Abhängigkeit von elektrischen Signalen des Klimaregelgerätes 7 von einem Stellmotor 14 gesteuert.

Die Um- und Frischluft wird mittels eines Ventilators 4 gefördert und dabei gleichzeitig verwirbelt. Es entsteht Mischluft 5, die dem Verdampfer 6 zugeführt und von diesem im Kühlbetrieb an den Fahrzeuginnenraum abgegeben wird.

Im Kühlbetrieb wird die Mischluft 5 über Ausströmer 10 an den Fahrgastraum abgegeben. Diese Ausströmer 10 sind in Kanälen 23 angeordnet, die in Richtung Windschutzscheibe, in Richtung Fahrer bzw. Beifahrer und in Richtung des Fußbereiches des Fahrers bzw. Beifahrers weisen. Mittels der in den einzelnen Kanälen angeordneten Luftverteilerklappen 11, kann der Lufteintritt vom Fahrer bzw. Beifahrer reguliert werden.

Dem Verdampfer 6 ist ein Heizwärmetauscher 8 nachgeordnet. Der Heizwärmetauscher 8 ist nur der Vollständigkeit halber dargestellt und muß im weiteren nicht weiter betrachtet werden.

Um die thermische Belastung des Systems festzustellen, sind im Frischluftstrom in der Nähe der Frischluftklappe 2 ein Temperatursensor 2a und ein Sensor für die relative Luftfeuchtigkeit 2b angeordnet.

Ein Temperatursensor 3a und ein weiterer Sensor für die relative Luftfeuchtigkeit 3b sind in der Nähe der Umluftklappe 3 angeordnet. Die Signale der Temperatursensoren 2a, 3a und der Luftfeuchtsensoren 2b, 3b, werden dem Klimaregelgerät 7 zur Berechnung der spezifischen Enthalpien für die Frischluft und die Umluft zugeführt, wobei das Klimaregelgerät 7 in Abhängigkeit dieser Signale die Frischluftklappe 2 und die Umluftklappe 3 so öffnet bzw. schließt, daß sich am Verdampfer 6 die niedrigste Enthalpiedifferenz einstellt.

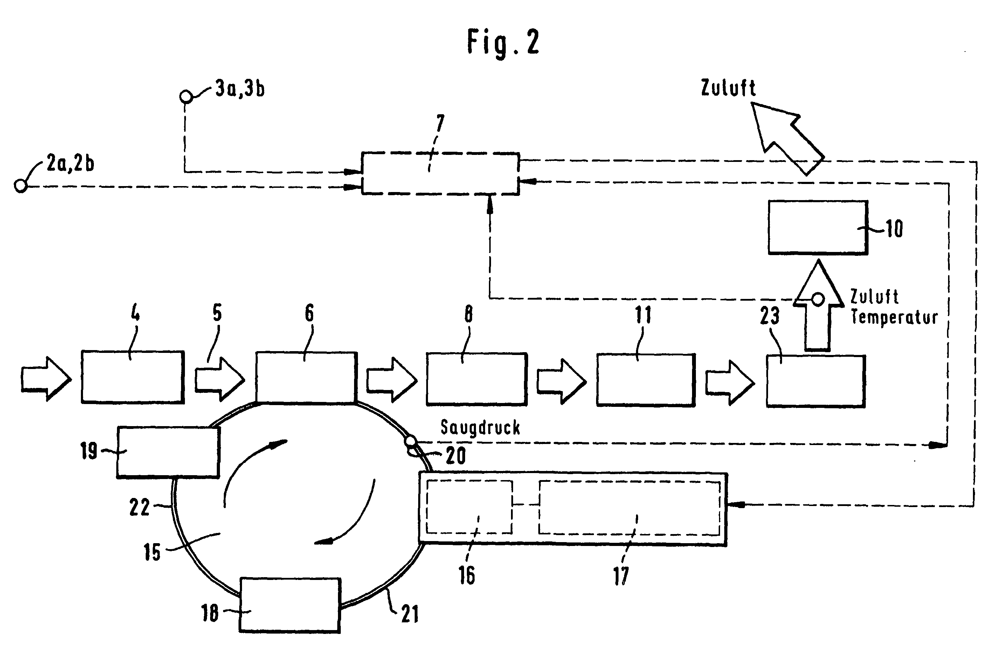

Der erfindungsgemäße Kühlmittelkreislauf soll nun anhand von Figur 2 erläutert werden.

Wie bereits erläutert, wird die hinter dem Ventilator 4 anstehende Mischluft 5 dem Verdampfer 6 zugeführt. Dieser Verdampfer 6 wird mit Hilfe eines Kältemittelkreislaufes 15 im Kühlbetrieb gekühlt, so daß die in den Fahrgastinnenraum austretende Luft die vom Fahrer gewünschte Temperatur erhält.

Die Kühlung des Verdampfers 6 erfolgt über ein Kältemittel, welches im Kältemittelkreislauf 15 in Saug- und Druckleitungen 21, 22 umgewälzt wird.

Das Kältemittel verdampft im Verdampfer 6 und wird anschließend von dem Kompressor 16 angesaugt und verdichtet. Der Kompressor 16 bildet mit einem drehzahlgeregelten Elektromotor 17 eine bauliche Einheit. Vorteilhafterweise sind der Kompressor 16 und der Elektromotor 17 gemeinsam in einem Metallgehäuse angeordnet, um große Temperaturunterschiede aufnehmen zu können.

Danach wird das Kältemittel in einem Kondensator 18 gekühlt und verflüssigt und anschließend wird das flüssige Kältemittel durch eine Expansionseinheit 19 entspannt und als Naßdampf dem Verdampfer 6 wieder zugeführt.

Um nun die Fördermenge des Kältemittels proportional zu einer thermischen Belastung des Systems steuern zu können, muß im Klimaregelgerät 7 die thermische Belastung des Systems bestimmt werden. Die thermische Belastung variiert in Abhängigkeit von der Temperatur und Feuchtigkeit innerhalb der Fahrgastzelle, Sonnenstrahlen usw.

Wie schon beschrieben, wird die thermische Belastung durch die Frischluftsensoren 2a, 2b und die Umluftsensoren 3a, 3b an das Klimaregelgerät 7 gemeldet.

Das Klimaregelgerät 7 wertet die von den Sensoren 2a, 3a, 3b, 2b gelieferten Signale aus, vergleicht sie mit der vom Fahrzeugnutzer eingestellten Wunschtemperatur und bestimmt aus diesen Parametern den Sollwert für den Saugdruck. Dieser Sollwert wird mit einem aktuellen Saugdruck verglichen, welcher durch den Drucksensor 20 in der Ansaugleitung des Kompressors 16 gemessen und an das Klimaregelgerät 7 ausgegeben wird. Mit einem dem Ergebnis des Vergleiches zwischen aktuellem Saugdruck und Sollwert des Saugdruckes entsprechenden pulsweitenmodellierten Spannungssignal wird der Elektromotor 17 angesteuert. Aufgrund dieser Regelung ist es möglich, die Drehzahl am Kompressor 16, welcher einen festen Hubraum aufweist, entsprechend des Kälteleistungsbedarfs und des Grenzwertes für den Saugdruck einzustellen. Der funktionelle Zusammenhang zwischen minimalem Saugdruck und Drehzahl des Antriebs ist im Klimaregelgerät 7 abgespeichert.

Aufgrund der vorliegenden Erfindung wird der Saugdruck von der einzustellenden Behaglichkeit im Fahrzeuginnenraum bestimmt. Die einzustellende Behaglichkeit wird dabei durch die Temperatur und die relative Luftfeuchtigkeit vorgegeben. Da zu einem bestimmten Saugdruck immer eine bestimmte Verdampfungstemperatur des Kältemittels im Verdampfer 6 gehört, entspricht bei gleichem Luftmassenstrom und gleicher Lufttemperatur und relativer Feuchtigkeit dieser bestimmte Saugdruck einer bestimmten Oberflächentemperatur am Verdampfer 6. Dadurch daß der Saugdruck einer bestimmten Oberflächentemperatur entspricht, wird die Drehzahl des Antriebsmotors 17 so geregelt, daß sich ein Saugdruck einstellt, welcher einer gewünschten Oberflächentemperatur am Verdampfer 6 entspricht, wodurch sich der gewünschte Zustand im Fahrzeug einstellt.

Dabei ist zu berücksichtigen, daß bei gleichem Saugdruck in Abhängigkeit der vorliegenden Wetterbedingungen unterschiedliche Fördermengen am Kältemittel eingestellt werden, was insbesondere eine Folge der Abhängigkeit der Dichte des Kältemittels von der Temperatur ist.

Eine noch gezieltere Beeinflussung der Behaglichkeit im Fahrzeuginnenraum wird erreicht, wenn neben den Witterungsbedingungen auch der Zustand am Kondensator 8 berücksichtigt wird. Im Kondensator wird die Wärme, die das Kältemittel im Verdampfer 6 aufnimmt, und die Wärme, die beim Kompressionsvorgang entsteht, abgeführt. Wird diese nicht richtig abgeführt, so steigt auch der Saugdruck bei gleicher Fördermenge an. Es besteht insbesondere eine direkte Beziehung zwischen Saugdruck und der absoluten Feuchte, wodurch sich auch die Feuchte im Fahrzeug gezielt über den Saugdruck einstellen läßt.

## Patentansprüche

1. Verfahren zur Einstellung des Saugdruckes in einem Kältemittelkreislauf eines Kraftfahrzeuges, bei welchem ein aktueller Saugdruck bestimmt und mit einem einzustellenden Saugdruck vergüchen wird, wobei in Abhängigkeit des Vergleichs die Fördermenge eines Kühlmittels im Kältemittelkreislauf eingestellt wird, **dadurch gekennzeichnet, daß** der einzustellende Saugdruck über eine Drehzahlregelung eines Antriebselementes variiert wird.

2. Verfahren nach Anspruch 1 **dadurch gekennzeichnet, daß** der einzustellende Saugdruck kontinuierlich veränderbar ist.

3. Vorrichtung zum Betreiben eines Kältemittelsystems in einem Klimagerät für ein Kraftfahrzeug, bei welchem durch einen Verdampfer strömende Luft über ein Kältemittel gekühlt wird, dessen Fördermenge durch einen von einem Antrieb betriebenen Kompressor eingestellt wird, **dadurch gekennzeichnet, daß** die Drehzahl des vom Kraftfahrzeugmotor unabhängig betriebenen Antriebs in Abhängigkeit von einem am Kompressor einzustellenden Saugdruck bestimmt wird.

4. Vorrichtung nach Anspruch 3 **dadurch gekennzeichnet, daß** eine Regeleinrichtung den aktuellen Saugdruck mit dem einzustellenden Saugdruck vergleicht und in Abhängigkeit des Vergleiches die Drehzahl des Antriebes während der gesamten Betriebsdauer des Kompressors variiert.

5. Vorrichtung nach Anspruch 3 oder 4, **dadurch gekennzeichnet, daß** der Kompressor (16) und der drehzahlgeregelte Antrieb (17) eine bauliche Einheit bilden.

6. Vorrichtung nach Anspruch 3, 4 oder 5, **dadurch gekennzeichnet, daß** der drehzahlgeregelte Antrieb (17) ein Elektromotor ist.

7. Vorrichtung nach Anspruch 6, **dadurch gekennzeichnet, daß** die Regeleinrichtung (7) den Elektromotor (17) getaktet ansteuert.

8. Vorrichtung nach Anspruch 7 **dadurch gekennzeichnet, daß** die getaktete Ansteuerung des Elektromotors (17) über eine Variation der Pulsweite des von der Regeleinrichtung (7) erzeugten Ansteuersignals erfolgt.

9. Vorrichtung nach Anspruch 3 oder 4 **dadurch gekennzeichnet, daß** der drehzahlgeregelte Kompressor (16) ein konstantes Hubvolumen aufweist.

## Claims

1. Method for setting the suction pressure in a refrigerant circuit of a motor vehicle, in which a current suction pressure is determined and is compared with a suction pressure to be set, the delivery rate of a refrigerant in the refrigerant circuit being set as a function of the comparison, **characterized in that** the suction pressure to be set is varied by regulating the speed of a drive element.

2. Method according to Claim 1, **characterized in that** the suction pressure to be set can be modified continuously.

3. Device for operating a refrigerant system in an air conditioning unit for a motor vehicle, in which air flowing through an evaporator is cooled via a refrigerant, the delivery rate of which is set by means of a compressor operated by a drive, **characterized in that** the speed of the drive, operated independently of the motor vehicle engine, is determined as a function of a suction pressure to be set on the compressor.

4. Device according to Claim 3, **characterized in that** a regulating device compares the current suction pressure with the suction pressure to be set and varies the speed of the drive during the entire operating period of the compressor as a function of the comparison.

5. Device according to Claim 3 or 4, **characterized in that** the compressor (16) and the speed-regulated drive (17) form a structural unit.

6. Device according to Claim 3, 4 or 5, **characterized in that** the speed-regulated drive (17) is an electric motor.

7. Device according to Claim 6, **characterized in that** the regulating device (7) activates the electric motor (17) in a clocked manner.

8. Device according to Claim 7, **characterized in that** the clocked activation of the electric motor (17) is carried out by varying the pulse width of the activating signal generated by the regulating device (7).

9. Device according to Claim 3 or 4, **characterized in that** the speed-regulated compressor (16) has a constant displacement.

## Revendications

1. Procédé permettant de régler la pression d'aspiration dans un circuit à réfrigérant d'un véhicule automobile, au cours duquel on détermine une pression d'aspiration actuelle et on la compare à une pression d'aspiration à régler, le débit de circulation d'un produit réfrigérant étant réglé, en fonction du résultat de la comparaison, dans le circuit à réfrigérant, **caractérisé en ce que** l'on fait varier la pression d'aspiration à régler par l'intermédiaire d'une régulation de la vitesse de rotation d'un élément d'entraînement.

2. Procédé selon la revendication 1 **caractérisé en ce que** la pression d'aspiration à régler est modifiable d'une façon continue.

3. Dispositif permettant d'exploiter un système à réfrigérant dans un appareil de climatisation pour un véhicule automobile, dans lequel de l'air circulant sur un évaporateur est refroidi par l'intermédiaire d'un produit réfrigérant, dont le débit de circulation est réglé par un compresseur commandé par un entraînement, **caractérisé en ce que** la vitesse de rotation de l'entraînement commandé indépendamment du moteur du véhicule automobile est déterminée en fonction d'une pression d'aspiration à régler au niveau du compresseur.

4. Dispositif selon la revendication 3 **caractérisé en ce que** un dispositif de régulation compare la pression actuelle d'aspiration à la pression d'aspiration à régler et fait varier, en fonction du résultat de la comparaison, la vitesse de rotation de l'entraînement pendant toute la durée de fonctionnement du compresseur.

5. Dispositif selon la revendication 3 ou 4 **caractérisé en ce que** le compresseur (16) et l'entraînement (17) à vitesse de rotation régulée constituent une unité constructive.

6. Dispositif selon la revendication 3, 4 ou 5 **caractérisé en ce que** l'entraînement (17) à vitesse de rotation régulée est un moteur électrique.

7. Dispositif selon la revendication 6 **caractérisé en ce que** le dispositif de régulation (7) commande le moteur électrique (17) d'une façon cadencée.

8. Dispositif selon la revendication 7 **caractérisé en ce que** la commande cadencée du moteur électrique (17) se fait par l'intermédiaire d'une variation de la largeur des impulsions du signal de commande généré par le dispositif de régulation (7).

9. Dispositif selon la revendication 3 ou 4 **caractérisé en ce que** le compresseur (16) à vitesse de rotation régulée a une cylindrée constante.
